Europäisches Patentamt

European Patent Office

Office européen des brevets

(19)

(11) Publication number: **0 513 516 A2**

# EUROPEAN PATENT APPLICATION

(12)

(21) Application number: **92105803.8**

(22) Date of filing: **03.04.92**

(51) Int. Cl.⁵: **G06F 15/62**

(30) Priority: **08.05.91 US 697141**

(43) Date of publication of application:
**19.11.92 Bulletin 92/47**

(84) Designated Contracting States:
**DE FR GB IT**

(71) Applicant: **International Business Machines Corporation**
**Old Orchard Road**
**Armonk, N.Y. 10504(US)**

(72) Inventor: **Ferracini, Bruno**
**Via C. Pavese 5**
**I-20063 Cernusco S/N Milano(IT)**
Inventor: **Gonzalez-Lopez, Jorge**
**Managua 19, Mairena del Aljarafe**
**ES-41927 Sevilla(ES)**
Inventor: **Pettazzi, Giancarlo**
**Via C. C. Venini 34**
**I-20127 Milano(IT)**

(74) Representative: **Burt, Roger James, Dr. et al**
**IBM United Kingdom Limited Intellectual**
**Property Department Hursley Park**
**Winchester Hampshire SO21 2JN(GB)**

(54) **Apparatus for and method of reducing a digital image.**

(57) Apparatus for reducing the size of a digital image by a specified scaling factor of G from a first digital image to a second digital image comprises an image buffer 102 to contain the first digital image, an interpolator 104 to magnify the first digital image by a first scaling factor G1 and to output an intermediate digital image indicative of the magnified first image, a shrinking module 108 to shrink the intermediate digital image output by the interpolator by a second scaling factor G2 thereby to generate a second digital image and a frame buffer 112 to store the second digital image.

The second scaling factor G2 is the inversion of a power of two and G1 is chosen so that $G = G1 \times G2$. By using a power of two, the shrinking module 108 can use a simple shifting technique to obtain reduction.

EP 0 513 516 A2

The present invention relates to the reduction in size of a digital image in processing.

Countless applications exist where a digital image needs to be reduced. A simple method used to achieve the reduction operation is so-called pixel decimation. Pixel decimation generally consists of selecting every Nth pixel in the X direction of the original image and every Mth pixel in the Y direction of the original image, and discarding all other pixels to obtain a reduction in the size of the original image.

A disadvantage of this method, however, is that the information contained in the discarded pixels is lost completely. Images containing linear features, like maps or text, experience an annoying visual effect when processed by this method.

One way to mitigate this effect is to apply some filtering function that computes some local weighted average on the input pixels within a specified neighbourhood around the position of the output pixel. The value of the output pixel is then obtained as a combination of the corresponding input neighbour pixels. This technique is described by Tabata et al., "High Speed Image Scaling for Integrated Document Management" ACM 2nd Conf. on Office Information Systems, Toronto (June 1984), using a 2 by 2 neighbourhood weighting window on the input image. However, even this approach encounters the same problem when the reduction factor is over 2: some input pixels do not participate in the computation of any output pixel.

One way to avoid the problem is to extend the size of the neighbourhood window or the filter kernel so that no input pixel is missed in the computation of the output pixels. The problem associated with this technique is that it requires different kernels for different scaling factors. Thus, the user may specify a scaling factor which may involve multiplication or division operations. Multiplication and divisional operations require complex circuitry, thus slowing down the image reduction process to unacceptable levels.

This invention seeks to provide a simple method and apparatus for reducing a digital image by almost any factor. To this end, the image is enlarged by a scaling factor G1 and the enlarged image reduced by a scaling factor G2 which is the inversion of of a power of two, where G1 x G2 is equal to the desired factor G.

In one embodiment, the apparatus comprises an electronic circuit for reducing the size of a first digital image to a second digital image by a specified scaling factor of G. The electronic circuit comprises an image buffer the image buffer configured to store the first digital image, an interpolator module configured to magnify the first digital image by a first scaling factor G1, and intermediate digital image indicative of the magnified first image, a shrinking module configured to reduce the intermediate digital image output by the interpolator module by a second scaling factor G2, being the inversion of a power of two and where G = G1 x G2, and a frame buffer module configured to store the reduced digital image. A controller is configured to control the interpolator and the shrinking module.

The shrinking module will always reduce the intermediate image by a power of two. In other words, the shrinking module is configured to reduce the intermediate image by factors of 1/2, 1/4, 1/8, and so on. Thus, the shrinking module may comprise simple logic circuitry to perform the reduction operation. No complicated multiplication and/or division circuitry is necessary.

In contrast, the interpolator module is configured to magnify the first image by virtually any scaling factor. This feature allows the shrinking module to operate at scaling factors of the inversion of a power of two. In other words, the scaling factor G1 of the interpolator module is varied so that a scaling factor G2 of the shrinking module is always the inversion of a power of two and the overall scaling factor G is achieved.

The scope of the invention is defined by the appended claims; and how it can be carried into effect is particularly described with reference to the accompanying drawings in which:

FIGURE 1 is a high level block diagram showing one embodiment of the architecture of apparatus according to the present invention;

FIGURE 2 is a high level block diagram showing one embodiment of the method according to the present invention;

FIGURE 3 is a high level block diagram showing a more detailed illustration of part of Figure 1;

FIGURES 4A to 4C are pictorial illustrations of steps in the reduction of a one dimensional image by a scaling factor of 3/10;

FIGURES 5A and 5B are pictorial illustrations of steps in the reuction of a two dimensional image by a scaling factor of 1/4 in the X direction;

FIGURE 6 is a pictorial illustration of a cell that is used in the reduction process of Fig.5; and

FIGURES 7A and 7B together form high level flow chart showing the operation of the controller which controls the apparatus of the present invention.

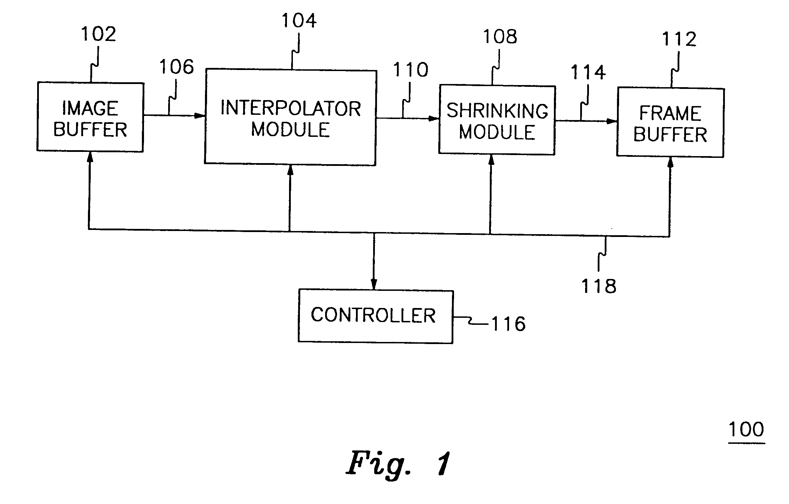

An image scaling circuit 100 (Figure 1) according to the present invention, is configured to scale a digital image by a scaling factor of G. When the scaling factor G is less than one, the image is reduced. The circuit 100 may also be used to magnify an image. In this case, the scaling factor G is greater than one.

2

The circuit 100 includes an image buffer 102 which is a conventional memory device containing the digital image to be processed. The image buffer 102 may be loaded by any of a number of mechanical and/or electrical processes. By way of example only, the image buffer 102 may be loaded as a result of digitizing the output of a television camera.

The circuit 100 also includes an interpolator 104 which is an electronic device configured to magnify the image contained in the image buffer 102 by a specified factor. The buffer 102 is connected to the interpolator 104 by bus 106.

The interpolator 104 implements a scaling factor, G1, of the form

$$G1 = A/B; A \geq B \qquad (1)$$

where A and B are positive integers.

The interpolator 104 may take the form of any of a number of well known interpolators. By way of example only, interpolator 104 may be configured as disclosed by Tabata et al., "High Speed Image Scaling for Integrated Document Management" ACM 2nd Conf. on Office Information Systems, Toronto (June 1984), or in US-A-4,988,984.

The circuit 100 further includes a shrinking module 108 which is configured to shrink the image output on bus 110 by the interpolator 104 when a scaling factor G2 less than one is specified.

The circuit 100 yet further includes a frame buffer 112 which is a two dimensional memory device configured to store the image output on bus 114 by the shrinking circuit 108 (referred to herein as the output image). Frame buffer 112 may take the form of any of a number of conventional memory devices. Such conventional memory devices include, but are not limited to, a single-buffer image display device, or a non-visible buffer of a double-buffer image display device.

The circuit 100 includes a controller 116 which is a device configured to control the overall operation and is connected by bus 118 to the buffer 102, the interpolator 104, the shrinking module 106 and the buffer 108. In the preferred embodiment, controller 116 comprises a digital signal processor and discrete logic and programmable logic devices. The signal processor of controller 116 may be a Texas Instruments model No. TMS320C16.

Controller 116 may take the form of any of a variety of conventional control devices. Such devices include, but are not limited to, a microprocessor or combination of microprocessor and hardwired logic or programmable logic controller (PLC).

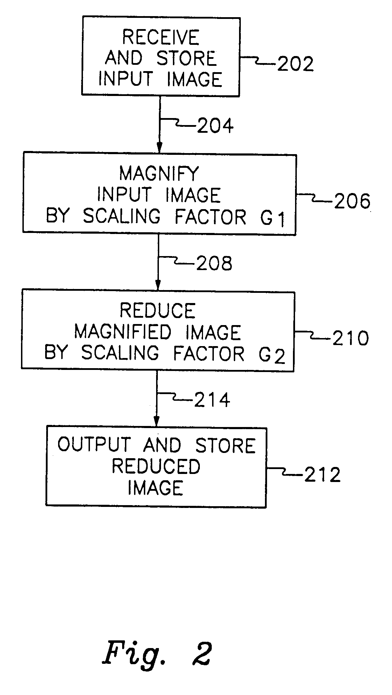

In operation, during a first step 202 (Fig.2), the circuit 100 operates to receive and store an image to be reduced, hereinafter referred to as the "input image". Control is then passed along a logic path 204.

In the following step 206, the input image is then magnified by a scaling factor G1. Control is then passed along a logic path 208.

In the following step 210, the image magnified as a result of the step block 206 is reduced by a scaling factor G2. Control is then passed along a logic path 214.

In the final step 212, the reduced image (output image) is output to and stored in a storage device.

As can be seen, the input image has thus been reduced by an overall Scaling factor of G = G1 x G2.

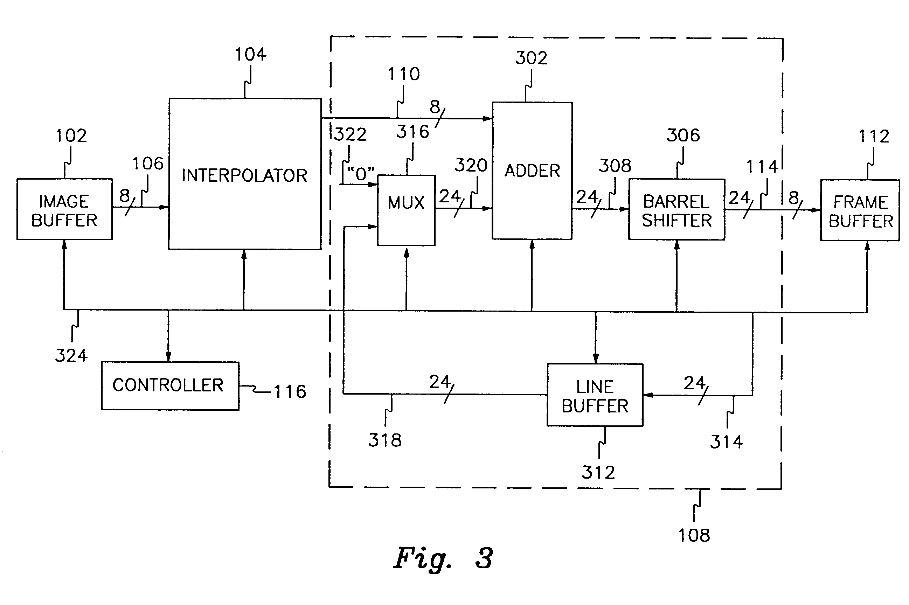

The shrinking module 108 (FIGURE 3) includes an adder 302 which is configured to add binary numbers. Adder 302 may take the form of any of a variety of adders. In the preferred embodiment, adder 302 is a conventional 24 bit adder. One input to the adder 302 is from the interpolator 104 on bus 110.

Shrinking module 108 further includes a barrel shifter 306 which is configured to perform an arithmetic right shift of $h$ bits upon the output of adder 302 on bus 308. One right shift is equivalent to a division by two in the binary system. The $h$ bits are specified by the controller 116. The binary representation of the output is as follows:

$$\text{Output} = \text{input} / (2^{**}h) \qquad (2)$$

where $h$ is a parameter loaded by the controller 116. In the preferred embodiment, $h$ may range from 0 to 16 shifts.

Shrinking module 108 further includes a line buffer 312 which is a memory buffer containing a number of locations equal to the horizontal size of the frame buffer 112. Line buffer 312 may take the form of any of a number of conventional memory devices. Such conventional memory devices include, but are not limited to, a static random access memory device. The buffer 312 receives the output of shifter 306 on buses 114 and 314.

Shrinking module 108 yet further includes a multiplexer (Mux) 316 which is configured to select the output of the line buffer 312 on bus 318 or the logical representation of the number zero ('0') on bus 322, and input the same on bus 320 to the adder 302. Multiplexer 316 is also under control of the controller 116.

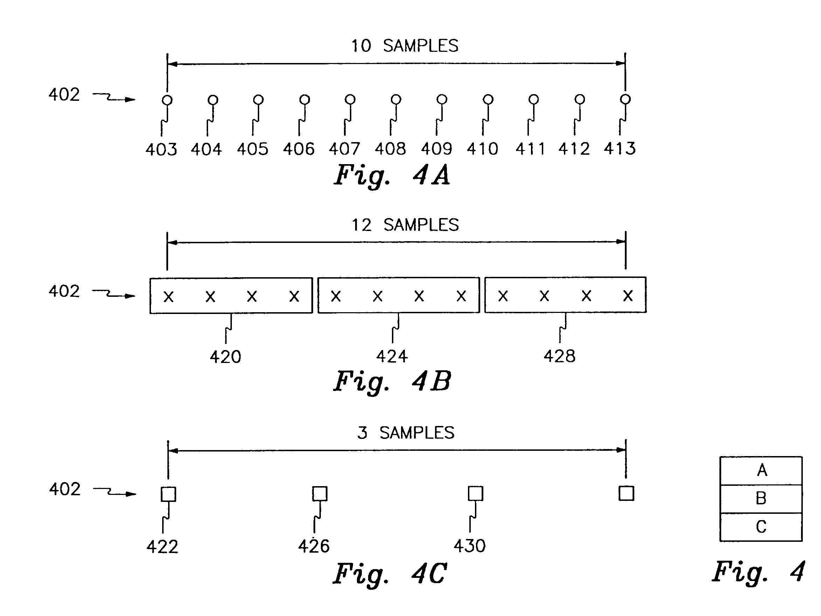

The operation of the circuit 100 will first be described with reference to a one-dimensional example (Fig.4). Thereafter, an extension to a two-dimensional example will be given in more elaborate detail.

A one-dimensional input image in the form of a single row 402 (Fig.4A) of pixels 403 to 412 is to be reduced by a scaling factor G = 3/10.

To achieve a scaling factor of G = .3/10 or 0.3, the row 402 is magnified first by a scaling factor G1 = 12/10 by the interpolator 104 and the resultant image of 12 pixels (Fig.4B) is defined as the intermediate image. The mathematical foundation for calculation of G1 will be more fully described hereinafter.

Thereafter, and as shown by FIGURE 4C, the shrinking module 108 is then configured to shrink the intermediate image by a scaling factor of G2 = 1/4 (Fig.4C). The overall resultant scaling factor is

$$G = G1^*G2 = \frac{12}{10} * \frac{1}{4} = \frac{3}{10}$$

As will be more fully described hereinafter, the shrinking operation performed by shrinking module 108 is implemented by averaging four neighbouring pixels of a first cell 420 of the intermediate image and assigning the average value to an output pixel 422. The average of the pixels in a second cell 424 is assigned to output pixel 426. The average of pixels in a third cell 428 is assigned to output pixel 430.

In the preferred embodiment, the averaging is done over a number of pixels of the intermediate image, which number is always a power of two. By requiring the number of pixels in a given row and/or column of a cell to be a power of two, the division required for averaging the neighbouring pixels is a simple shift operation which can be performed by barrel shifter 306. As such, complicated division and/or multiplication circuitry is unnecessary.

The mathematical foundation will now be described. The one-dimensional case is presented first. The concept can be easily extended to two dimensions.

The specified scaling factor $G_x$ ($G_x \leq 1$ in the preferred embodiment) is decomposed into two scaling factors:

$$G_x = G1_x . G2_x \qquad (3)$$

where

$G_x \leq 1$;
$G1_x = A_x/B_x$; ($B_x \leq A_x$; $A_x$ and $B_x$ are positive integers);     (4)

and

$$G2_x = 1/(2^{**}q_x); \quad (q_x \geq 0; \ q_x \text{ is an integer}). \qquad (5)$$

It follows that

$$G_x = G1_x . G2_x = \frac{A_x}{(2^{**}q_x) \ B_x} \qquad (6)$$

$q_x$ is selected such that

$$q_x = CEIL(-LOG2(G_x)) \qquad (7)$$

where CEIL is the smallest integer equal to or greater than the operand, and LOG2 is the logarithm in base 2 function.

The value $A_x$ is usually fixed in the implementation of the interpolator 104. It follows from (6) that

$$B_x = \frac{A_x}{(2^{**}q_x)\ G_x} \tag{8}$$

which may not be an integer. $B_x$ is approximated then by $B_x'$ as follows:

$$B'_x = \text{ROUND } \frac{A_x}{(2^{**}q_x)\ G_x} \tag{9}$$

where the ROUND function provides the closest integer to its operand.
The absolute error $B_x' - B_x$ is obviously bounded as follows:

$$|B'_x - B_x| \leq 0.5 \tag{10}$$

where the vertical bars mean the absolute value of the expression in between. The resultant magnification factor is then given by

$$G'_x = \frac{A_x}{(2^{**}q)\ B'_x} \tag{11}$$

where $G_x'$ is an approximation to the specified magnification factor $G_x$.
The actual relative error defined as

$$Er(G) - \left| \frac{G'_x - G_x}{G_x} \right| \tag{12}$$

can be shown to be approximated by

$$Er(g) - \left| \frac{B'_x - B_x}{B_x} \right| < A_x - 1 \tag{13}$$

Expression (13) assumes that

$$A_x > 1 \tag{14}$$

as is the case in the implementation. The inequality in expression (13) is based on the fact that

$$1 \leq (2^{**}q_x G_x) < 2 \tag{15}$$

as can be verified easily taking into account expressions (7) and (8). As an example, for $A_x = 1024$, the relative error for $G_x$ is less than 0.1%.

Similar considerations apply to a two-dimensional input image with scaling factors $G_x$ and $G_y$ in the X and directions, respectively.

To initiate operation, the controller 116 requires the following information (note that there is some redundancy so that not all following parameters are strictly needed):
- The specified scaling factors in X and Y ($G_x$ and $G_y$).

- Origin and dimension of the input image (stored in image buffer 102).
- Origin and dimension of the output image.

The controller 116 then computes:

- $q_x$ and $q_y$ using equation (7). (One for each direction).
- $B'_x$ and $B'_y$ using equation (9).
- $G1_x$ and $G1_y$ as follows:

$$G1_x = \frac{A_x}{B'_x}$$

$$G1_y = \frac{A_y}{B'_y}$$

Typically, the interpolator 104 is configured so that $A_x = A_y = A$.

Thereafter, the controller 116 sets the operation of the interpolator 104 by specifying the origin and dimension of the input image, the scaling factors of the intermediate image ($G1_x$ and $G1_y$), and instructs it to start the operation. The controller 116 is then configured to start the operation of the shrinking module 108 by executing the steps set out hereinafter.

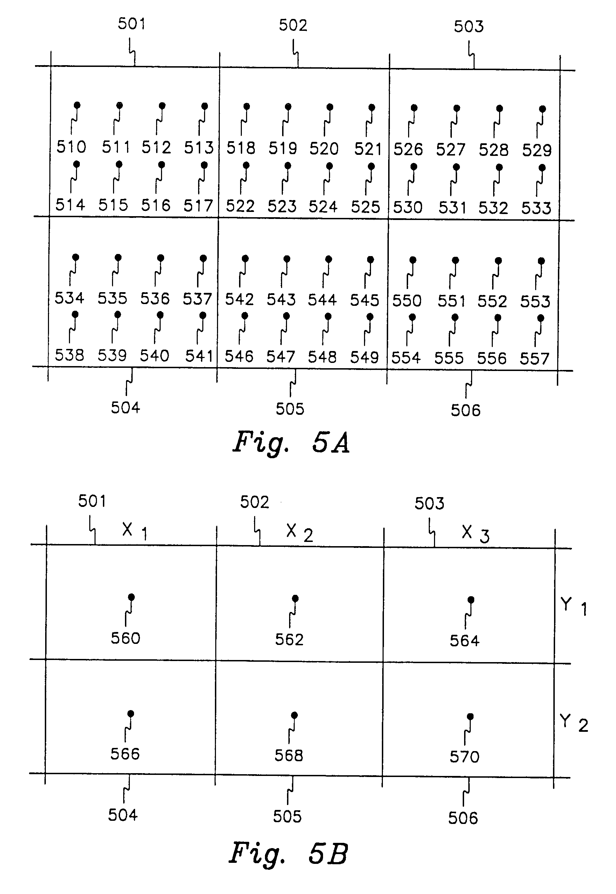

A two dimensional input image (not shown) is magnified first by magnification factors G1x and G1y and results in an intermediate image (FIGURE 5A). Part of the intermediate image is conceptually divided into cells 501 to 506. Each of cells 501 to 506 is defined by M rows of pixels and by N columns of pixels. The numbers of pixels in both rows and columns are powers of two. In the example shown, each cell has two rows and four columns of pixels. Each cell corresponds to a single pixel of the output image. A value equal to the cell average is assigned to the corresponding output pixel in the output image (Fig.5B).

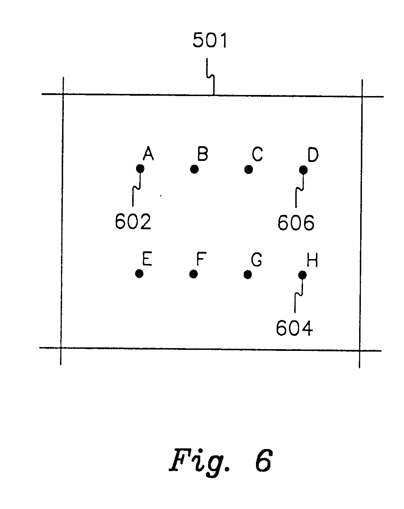

It is assumed that The image is processed in a raster scan fashion, row by row, from left to right, and from top to bottom. Pixel 602 (also labelled A) (FIGURE 6) is called "first point of cell", pixel 604 (also labelled H) is called "last point of cell". Pixel 606 (also labelled D) and pixel 604 are each called "last point of cell row". Points of the frame buffer window (FIGURE 5B) in which the result is stored are labelled in a similar way.

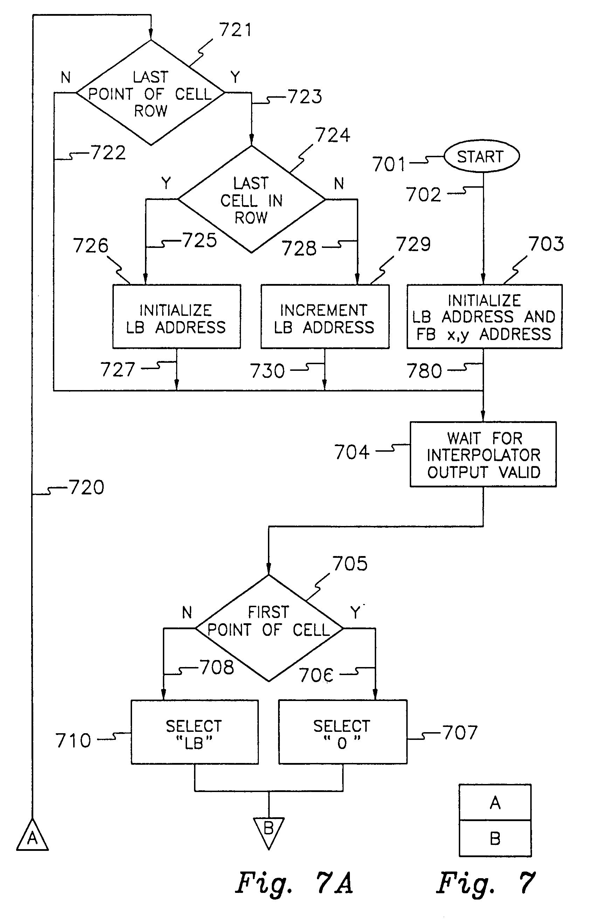

The operation of controller 116 is initiated with a start step 701 (FIGURE 7A). Thereafter, control is passed along a logic path 702 to an operational step 703 during which the controller 116 is configured to initialize the address in the line buffer 312 (the first address position) and to initialize the x and y addresses in the frame buffer 112 (defined as address x, y,).

Control is passed along a logic path 780 to an operational step 704, during which the controller 116 instructs the shrinking module 108 to wait for a valid output from the interpolator 104. A valid output would be a pixel value. In the present example, interpolator 104 first outputs the value of pixel 510.

Control is then passed to a decisional step 705, by which the controller 116 is then configured to determine whether pixel 510 is the first point of the cell.

In the present example, as pixel 510 is the first point of cell, control is passed along a logic path 706 to an operational step 707, during which the controller 116 instructs the multiplexer 316 to select the logic value "0". The 0 value is then input to the adder 302 where it is added to the value of pixel 510. This summation is then output to barrel shifter 306.

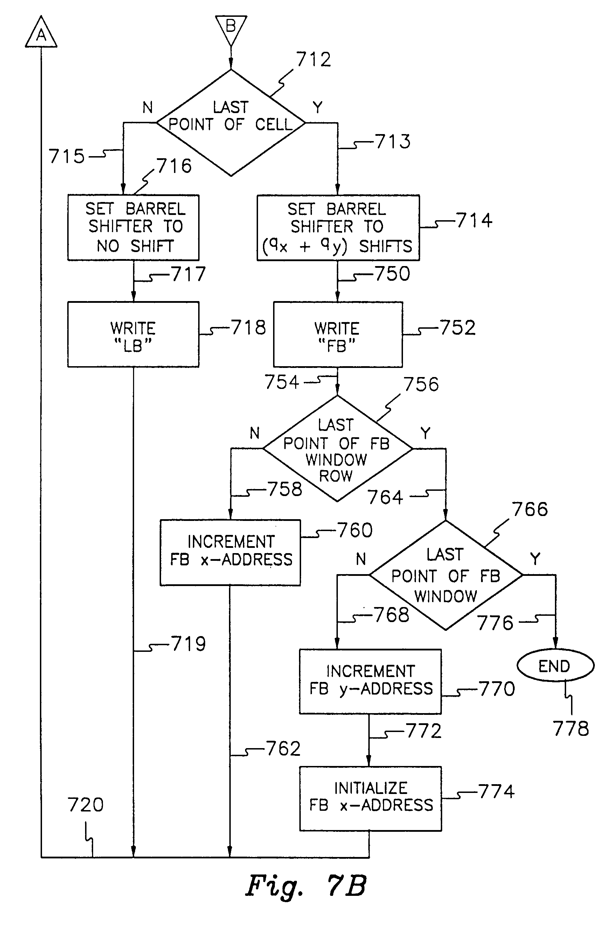

Control is then passed to a decisional step 712 (Figure 7B) during which the controller 116 is configured to determine whether pixel 510 is the last point of cell.

As pixel 510 is not the last point of cell, control is passed along a logic path 715 to an operational step 716, during which the controller 116 sets the barrel shifter 306 to a no shift position.

Control is then passed along a logic path 717 to an operational step 718 during which the controller 116 is configured to write the output of the barrel shifter 306 (i.e., currently only the value of pixel 510) into the first address of the line buffer 312.

Control is then passed along logic paths 719 and 720 to a decisional step 721 (Fig. 7A) during which the controller 116 is then configured to determine whether pixel 510 is the last point of cell row.

As pixel 510 is not the last point of cell row, control is returned along a logic path 722 to operational step 704, during which the controller 116 is configured to instruct the shrinking module 108 to wait for the next pixel from the interpolator 104. The next pixel output by the interpolator 104 is pixel 511.

Control is then passed to decisional step 705,during which controller 116 determines whether pixel 511 is the first point of the cell.

As pixel 511 is not the first point of cell, control is passed along a logic path 708 to an operational step 710, during which controller 116 is configured to set the multiplexer 316 to select the current value stored in the line buffer 312 as an input to the adder 302. In this operation, the adder 302 will add the value of pixel 511 to the current value in the line buffer 312, which at this time is only the value of pixel 510.

Control is then passed to decisional step 712 (Fig. 7B) during which controller 116 is configured to determine whether pixel 511 is the last point of the cell.

As pixel 511 is not the last point of cell, control is passed along a logic path 715 to operational step 716, during which controller 116 is configured to set the barrel shifter 306 to the no shift position.

Control is then passed along a logic path 717 to operational block 718, during which controller 116 is configured to write the contents of the barrel shifter 306, and thus the contents of adder 302 because no shift has occurred, into the line buffer 312. At this point, the value rewritten into the line buffer is the sum of pixels 510 and 511.

Control is then passed along logic paths 719 and 720 to decisional step 721 (Figure 7A) during which controller 116 is then configured to determine whether pixel 511 is the last pixel of cell row.

As pixel 511 is not the last point of cell row, control is returned along logic path 722 to operational stepk 704 during which controller 116 is configured to instruct the shrinking module 108 to wait for the next pixel output from the interpolator 104. In the present case, the next pixel output by the interpolator 104 is pixel 512.

Control is then passed to decisional step 705 during which controller 116 is configured to determine whether pixel 512 is the first point of cell.

As pixel 512 is not the first point of cell, control is passed along logic path 708 to operational step 710 during which controller 116 is configured to instruct the multiplexer 316 to input the contents current address (first address) of the line buffer 312 into the adder 302. At this point, the contents of the first address of the line buffer 312 are increased by the value of pixel 512 and the adder has now accumulated the values of pixels 510, 511 and 512.

Control is then passed to decisional step 712 (Figure 7B) during which controller 116 is configured to determine whether pixel 512 is the last point of cell.

As pixel 512 is not the last point of cell, control is passed along logic path 715 to operational step 716 during which controller 116 is configured to set the barrel shifter 306 to the no shift position.

Control is then passed along logic path 716 to operational step 718 during which controller 116 is configured to write the contents output from the barrel shifter 306, (i.e., the sum of pixels 510, 511 and 512) to the first address of the line buffer 312.

Control is then passed along logic paths 719 and 720 to decisional step 721 (Figure 7A) during which controller 116 is configured to determine whether pixel 512 is the last point of cell row.

As pixel 512 is not the last point of cell row, control is returned along logic path 722 to operational step 704 during which controller 116 is configured to set the shrinking module 108 to receive the next output pixel from the interpolator 104. In the present case, the next output pixel is pixel 513.

Control is then passed to decisional step 705 during which controller 116 is configured to determine whether pixel 513 is the first point of cell.

As pixel 513 is not the first point of cell, such control is passed along logic path 708 to operational block 710 during which controller 116 is configured to instruct the multiplexer 316 to select the value stored in the first address of line buffer 108 and input it to the adder 302 where it is added to the value of pixel 513.

Control is then passed to decisional step 712 during which controller 116 is configured to determine whether pixel 513 is the last point of cell. Pixel 513, although being the last pixel of cell row, is not the last pixel of the entire cell 501.

Thus control is passed along logic path 715 to operational step 716 during which 116 is configured to set the barrel shifter 306 to the no shift position.

Control is then passed along logic path 717 to operational block 718 during which controller 116 is configured to write the contents of barrel shifter 306 into the first address of line buffer 108. The first address of line buffer 108 now contains the sum of the values for pixels 510, 511, 512 and 513.

Control is then passed along logic paths 719 and 720 to decisional step 721 during which controller 116 is configured to determine whether pixel 513 is the last point of cell row.

As pixel 513 is the last point of cell row, control is passed along logic path 723 to decisional step 724 during which controller 116 is configured to determine whether cell 501 is the last cell in row.

As cell 501 is not the last cell in row, control is passed along logic path 728 to operational step 729 during which controller 116 is configured to increment the line buffer address of the line buffer 312. The pointer is now at the second address of the line buffer 312. The first address of the line buffer has stored therein the summation of pixels 510-513.

Control is then passed along logic path 730 to operational step 704 during which controller 116 is configured to instruct the shrinking module 108 to wait for the next pixel output from the interpolator 104. The next output pixel from the interpolator 104 is pixel 518.

Control is then passed to decisional step 705 during which controller 116 is configured to determine whether pixel 518 is the first point of cell (in this case, cell 502).

As Pixel 518 is the first point of cell 502, control is passed along logic path 706 to operational step 707 during which controller 116 is configured to instruct the multiplexer 316 to select the logic value of "0" for input to the adder 302. The adder 302 adds the logic value 0 to the value for pixel 518 and presents it as the input to the barrel shifter 306. Control is then passed to decisional step 712 during which controller 116 is configured to determine whether pixel 518 is the last point of cell 502.

As pixel 518 is not the last point of cell 502, control is passed along logic path 715 to operational step 716 during which controller 116 is configured to set the barrel shifter 306 to a no shift.

Control is then passed along logic path 717 to operational step 718 during which controller 116 is configured to write the output of the barrel shifter 306 (and thus the value of pixel 518) to the current address of the line buffer 312, which at this time is the second address.

Control is then passed along logic paths 719 and 720 to decisional step 721 during which controller 116 is configured to determine whether pixel 518 is the last pixel of cell row.

As pixel 518 is not the last point of cell row, control is passed along logic path 722 to operational step 704 during which controller 116 is configured to instruct the shrinking module 108 to wait for the next pixel output from the interpolator 104. The next output pixel from the interpolator 104 is pixel 519. Control is then passed to decisional step 705 during which controller 116 is configured to determine whether pixel 519 is the first point of cell 502.

As pixel 519 is not the first point of cell 502, control is passed along logic path 708 to operational step 710 during which controller 116 is configured to instruct the multiplexer 316 to select the value stored in the second address of line buffer 312 for input to the adder 302 where that value is summed with the value for pixel 519. The corresponding sum is then output to the barrel shifter 306.

Control is then passed to decisional step 712 during which controller 116 is configured to determine whether pixel 519 is the last point of cell.

As pixel 519 is not the last point of cell, control is passed along logic path 715 to operational step 716 during which controller 116 is configured to set the barrel shifter 306 to a no shift.

Control is then passed along logic path 717 to operational step 718 during which controller 116 is configured to write the output of the barrel shifter 306 to the second address of the line buffer 312. At this time, the contents of the second address of the line buffer 312 is the sum of pixels 518 and 519.

Control is then passed along logic paths 719 and 720 to decisional step 721 during which controller 116 is configured to determine whether pixel 519 is the last point of cell row.

As pixel 519 is not the last point of cell row, control is returned along logic path 722 to operational step 704 during which controller 116 is configured to instruct the shrinking module 108 to wait for the next output pixel from the interpolator 104. The next output pixel is pixel 520.

Control is then passed to decisional step 705 during which controller 116 is configured to determine whether pixel 520 is the first point of cell 502.

As pixel 520 is not the first point of cell, control is passed along logic path 708 to operational step 710 during which controller 116 is configured to instruct the multiplexer 316 to select the current value of the second address of line buffer 312 and input it to the adder 302, where it is added to the value for pixel 520. This sum is then output to barrel shifter 306.

Control is then passed to decisional step 712 during which controller 116 is configured to determine whether pixel 520 is the last point of cell 502.

As pixel 520 is not the last point of cell 502, control is passed along logic path 715 to operational step 716 during which controller 116 is configured to set the barrel shifter 306 to a no shift.

Control is then passed along logic path 717 to operational step 718 during which controller 116 is configured to write the output of the barrel shifter 306 to the second address of the line buffer 312.

Control is then passed along logic paths 719 and 720 to decisional step 721 during which controller 116 is configured to determine whether pixel 520 is the last point of cell row.

As pixel 520 is not the last point of cell row, control is passed along logic path 722 to operational step 704 during which controller 116 is configured to instruct the shrinking circuit 108 to wait for the next output pixel from the interpolator 104. The next output pixel from the interpolator 104 is pixel 521.

Control is then passed to decisional step 705 during which controller 116 is configured to determine whether pixel 521 is the first point of cell.

As pixel 521 is not the first point of cell, control is passed along logic path 708 to operational step 710 during which controller 116 is configured to instruct the multiplexer 316 to select the second address of line buffer 312 and input it to the adder 302 where this value is summed with pixel 521. This sum is then output to barrel shifter 306.

Control is then passed along logic path 719 and 720 to decisional step 721 during which controller 116 is configured to determine whether pixel 521 is the last point of cell row.

As pixel 521 is the last point of cell row, control is passed along logic path 723 to decisional step 724 during which controller 116 is configured to determine whether cell 502 is the last cell in row.

As cell 502 is not the last cell in the row, control is passed along logic path 728 to operational step 729 during which controller 116 is configured to increment the line buffer 312 address. This is the third address of the line buffer 312. The first address of line buffer 312 has stored therein the sum of values for pixels 510 to 513, and the second address of line buffer 312 has stored therein the sum of values for pixels 518 to 521.

Control is then passed to operational step 704 during which controller 116 is configured to instruct the shrinking module 108 to wait for the next output pixel from the interpolator 104. The next output pixel is pixel 526. Control is then passed to decisional step 705 during which controller 116 is configured to determine whether pixel 526 is the first pixel of cell 503.

As pixel 526 is the first pixel of cell 503, control is passed along logic path 706 to operational step 707 during which controller 116 is configured to instruct the multiplexer 316 to select the logic value "0" for input to the adder where it is added to the value of output pixel 526. This sum is then output to the barrel shifter 306.

Control is then passed to decisional step 712 during which controller 116 is configured to determine whether pixel 526 is the last point of cell 503.

As pixel 526 is not the last point of cell 503, control is passed along logic path 715 to operational step 716 during which controller 116 is configured to set the barrel shifter 306 to no shift.

Control is then passed along logic path 716 to operational step 718 during which controller 116 is configured to write the output of the barrel shifter 306 in the current address of line buffer 312, which at this time is the third address.

Control is then passed along logic paths 719 and 720 to decisional 721 controller 116 is configured to determine whether pixel 526 is the last point of cell 503 row.

As pixel 526 is not the last point of cell 503 row, control is returned along logic path 722 to operational step 704 during which controller 116 is configured to instruct the shrinking module 108 to wait for the next output pixel from the interpolator 104. The next output pixel from the interpolator 104 is pixel 527.

Control is then passed to decisional step 705 during which controller 116 is configured to determine whether pixel 527 is the first point of cell 503. As pixel 527 is not the first point of cell 503, and as such control is passed along logic path 708 to operational step 710 during which controller 116 is configured to instruct the multiplexer 316 to select the contents of the third address of line buffer 312 for input to the adder 302, where this is summed with the value for pixel 527. This sum is then output to barrel shifter 306.

Control is then passed to decisional step 712 during which controller 116 is configured to determine whether pixel 527 is the last point of cell 503. As pixel 527 is not the last point of cell 503, control is passed along logic path 715 to operational step 716 during which controller 116 is configured to set the barrel shifter 306 to no shift.

Control is then passed along logic path 717 to operational step 718 during which controller 116 is configured to write the output of the barrel shifter 306 to the third address of line buffer 312. Thus the third address of line buffer 312 contains the sum of pixels 526 and 527.

Control is then passed along logic paths 719 and 720 to decisional 721 during which controller 116 is configured to determine whether pixel 527 is the last point of cell row. As pixel 527 is not the last point of cell row, control is returned along logic path 722 to operational step 704 during which controller 116 is configured to instruct the shrinking circuit 108 to wait for the next output pixel from the interpolator 104. The next output pixel from the interpolator 104 is pixel 528.

Control is then passed to decisional step 705 during which controller 116 is configured to determine whether pixel 528 is the first point of cell 503.

As pixel 528 is not the first point of cell 503, control is passed along logic path 708 to operational step 710 during which controller 116 is configured to instruct the multiplexer 316 to select the contents of the

9

third address of line buffer 312 for input to the adder 302, where this is added to the value for pixel 528. This sum is then output to barrel shifter 306.

Control is then passed to decisional step 712 during which controller 116 is configured to determine whether pixel 528 is the last point of cell 503.

As pixel 528 is not the last point of cell 503, control is passed along logic path 715 to operational step 716 during which controller 116 is configured to set the barrel shifter 306 to the no shift position.

Control is then passed along logic path 716 to operational step 718 during which controller 116 is configured to write the output of barrel shifter 306 (the sum of pixels 526 to 528) to the third address of line buffer 312.

Control is then passed along logic paths 719 and 720 to decisional step 721 controller 116 is configured to determine whether pixel 528 is the last point of cell 503 row.

As pixel 528 is not the last point of cell row, control is returned along logic path 722 to operational step 704 during which controller 116 is configured to instruct the shrinking module 108 to wait for the next output pixel from the interpolator 104. The next output pixel from interpolator 104 is pixel 529.

Control is then passed to decisional step 705 during which controller 116 is configured to determine whether pixel 529 is the first pixel of cell 503.

As pixel 529 is not the first pixel of cell 503, control is passed along logic path 708 to operational step 710 during which controller 116 is configured to instruct the multiplexer 316 to select the contents of the third address of line buffer 312 for input to the adder 302, where it is added to the value for pixel 529. The sum is then output from the adder 302 to the barrel shifter 306.

Control is then passed to decisional step 712 during which controller 116 is configured to determine whether pixel 529 is the last point of cell 503.

As pixel 529, although the last pixel in the row, is not the last point of cell 503, control is passed along logic path 715 to operational step 716 during which controller 116 is configured to set the barrel shifter 306 to the no shift position.

Control is then passed along logic path 717 to operational step 718 during which controller 116 is configured to write the output of barrel shifter 306 (the sum of pixels 526 to 529) to the third address of line buffer 312.

Control is then passed along logic paths 719 and 720 to decisional step 712 during which controller 116 is configured to determine whether pixel 529 is the last point of cell row.

As pixel 529 is the last point of cell 503 row, control is passed along logic path 723 to decisional step 724 during which controller 116 is configured to determine whether cell 503 is the last cell in row.

As cell 503 is the last cell in the row, control is passed along logic path 725 to an operational step 726 during which controller 116 initializes the line buffer address 312. Controller 116 repositions the pointer to the first address of line buffer 312.

Control is then passed along logic path 727 to operational step 704 during which controller 116 is configured to instruct the shrinking module 108 to wait for the next output pixel from the interpolator 104. The next output pixel from the interpolator 104 is pixel 514 of cell 501.

Control is then passed to decisional step 705 during which controller 116 is configured to determine whether pixel 514 is the first point of cell 501.

As pixel 514 is not the first point of cell 501, control is passed along logic path 708 to operational step 710 during which controller 116 is configured to instruct the multiplexer 316 to select the contents of the first address of line buffer 312 to be input to the adder 302 where it is summed with the value for pixel 514. This sum is then output to barrel shifter 306.

Control is then passed to decisional step 712 during which controller 116 is configured to determine whether pixel 514 is the last point of cell 501.

As pixel 514 is not the last point of cell 501, control is passed along logic path 715 to operational step 716 during which controller 116 is configured to set the barrel shifter 316 to the no shift position.

Control is then passed along logic path 717 to operational step 718 during which controller 116 is configured to write the output of the barrel shifter 306 (the sum of pixels 510 to 514) to the first address of the line buffer 312.

Control is then passed along logic paths 719 and 720 to decisional step 721 during which controller 116 is configured to determine whether pixel 514 is the last point of cell row.

As pixel 514 is not the last point of cell row, control is returned along logic path 722 to operational step 704 during which controller 116 is configured to instruct the shrinking module 108 to wait for the next output pixel from the interpolator 104. The next output pixel from the interpolator 104 is pixel 515.

Control is then passed to decisional step 705 during which controller 116 is configured to determine whether pixel 515 is the first point of cell 501.

10

As pixel 515 is not the first point of cell 501, control is passed along logic path 708 to operational step 710 during which controller 116 is configured to instruct the multiplexer 316 to select the contents of the first address of line buffer 312 for input to the adder 302 where it is summed with the value of pixel 515. This sum is then output to the barrel shifter 306.

Control is then passed to decisional step 712 during which controller 116 is configured to determine whether pixel 515 is the last point of cell 501.

As pixel 515 is not the last point of cell 501, control is passed along logic path 715 to operational step 716 during which controller 116 is configured to set the barrel shifter 306 to the no shift position.

Control is then passed along logic path 717 to operational step 718 during which controller 116 is configured to write the output of the barrel shifter (i.e., the sum of pixels 510 to 515) into the first address of the line buffer 312.

Control is then passed along logic paths 719 and 720 to decisional step 721 during which controller 116 is configured to determine whether pixel 515 is the last point of cell row.

As pixel 515 is not the last point of cell row, control is returned along logic path 722 to operational step 704 during which controller 116 is configured to instruct the shrinking module 108 to wait for the next output pixel from the interpolator 104. The next output pixel from the interpolator 104 is pixel 516.

Control is then passed to decisional step 705 during which controller 116 is configured to determine whether pixel 516 is the first point of cell 501.

As pixel 516 is not the first point of cell 501, control is passed along logic path 708 to operational step 710 during which controller 116 is configured to instruct the multiplexer 316 to select the contents of the first address of line buffer 312 for input to the adder 302 where it is added to the value for pixel 516. This sum is then output to barrel shifter 306.

Control is then passed to decisional step 712 during which controller 116 is configured to determine whether pixel 516 is the last point of cell 501.

As pixel 516 is not the last point of cell 501, control is passed along logic path 715 to operational step 716 during which controller 116 is configured to set the barrel shifter 306 to the no shift position.

Control is then passed along logic path 717 to operational step 718 during which controller 116 is configured to write the output of barrel shifter 306 (the sum of pixels 510 to 516) into the first address of the line buffer 312.

Control is then passed along logic paths 719 and 720 to decisional step 721 during which controller 116 is configured to determine whether pixel 516 is the last point of cell row. As pixel 516 is not the last point of cell row, control is returned along logic path 722 to operational step 704 during which controller 116 is configured to instruct the shrinking module 108 to wait for the next output pixel from the interpolator 104. The next output pixel from the interpolator 104 is pixel 517.

Control is then passed to decisional step 705 during which controller 116 is configured to determine whether pixel 517 is the first pixel of cell 501.

As pixel 517 is not the first point of cell 501, control is passed along logic path 708 to operational step 710 during which controller 116 is configured to instruct the multiplexer 316 to select the contents of the first address of line buffer 312 to be input to the adder 302 where it is added to the value of pixel 517. This sum is then output to the barrel shifter 306.

Control is then passed to decisional step 712 during which controller 116 is configured to determine whether pixel 517 is the last point of cell 501.

As pixel 517 is the last point of cell 501, is then passed along a logic path 713 to operational step 714 during which controller 116 is configured to instruct the barrel shifter 306 perform a shift equal to $(q_x + q_y)$. In the present example, $q_x$ is 2 and $q_y$ is 1, and thus the barrel shifter 302 is set to divide the sum of all the pixels 510 to 517 of cell 501 by a factor of 8, which is equal to 3 shifts ($2^3 = 8$) in the barrel shifter 306. Because $q_x + q_y$ and the column length and row length of cell 501 are set to a power of 2, the division of the pixels contained in cell 501 can be performed by a simple barrel shifter as opposed to complicated multiplication and/or division circuitry.

Control is then passed along logic path 750 to operational step 752 during which controller 116 is configured to write the value of the summed pixels for cell 501 into the $X_1 Y_1$ address (not shown) of frame buffer 112. This is denoted as output pixel 560 (FIGURE 5B).

Control is then passed along logic path 754 to decisional step 756 during which controller 116 is configured to determine whether the output pixel 560 is the last output pixel of the frame buffer window row.

As output pixel 560 is not the last point of the frame buffer window row, control is passed along logic path 758 to operational step 760 during which controller 116 is configured to increment the frame buffer X address from $X_1$ to $X_2$. Control is then passed along logic paths 762 and 720 to decisional step 721 during which controller 116 is configured to determine whether pixel 517 is the last point of cell row.

As pixel 517 is the last point of cell row, control is passed along logic path 723 to decisional step 724 during which controller 116 is configured to determine whether cell 501 is the last cell in row.

As cell 501 is not the last cell in the cell row, control is passed along logic path 728 to operational step 729 during which controller 116 is configured to increment the line buffer 312 address from the first address to the second address. The second address has stored the values for pixels 518 to 521 and now the remaining pixels in the second row of cell 502 will also be added to this address location by repetition of the foregoing treatment of pixels 514 to 517 in the case of pixels 522 to 525.

Eventually control is passed to decisional step 712 during which controller 116 is configured to determine whether pixel 525 is the last point of cell 502.

As pixel 525 is the last point of cell 502, control is then passed along logic path 713 to operational step 714 during which controller 116 is configured to set the barrel shifter 306 to $(q_x + q_y)$ shifts. The cell under consideration is a 4x2 cells, and so a division of 8 and/or 3 shifts is set for the barrel shifter 306.

Control is then passed along logic path 750 to operational step 752 during which controller 116 is configured to write the output of the barrel shifter 306 (i.e., the average value of the sum of pixels 518 to 525) into the current address of frame buffer 112 which is $X_2,Y_1$. This is denoted as output pixel 562 (FIGURE 5B).

Control is then passed along logic path 754 to decisional step 756 during which controller 116 is configured to determine whether output pixel 562 is the last point of the frame buffer window row.

As output pixel 562 is not the last point of the frame buffer window row, control is then passed along logic path 758 to operational step 760 during which controller 116 is configured to increment the frame buffer X address, from $X_2,Y_1$ to $X_3,Y_1$. Control is then passed along logic paths 762 and 720 to decisional step 721 during which controller 116 is configured to determine whether pixel 525 is the last point of cell row.

As pixel 525 is the last point of cell row, control is then passed along logic path 723 to decisional step 724 during which controller 116 is configured to determine whether cell 502 is the last cell in the row.

As cell 502 is not the last cell in the row, control is then passed along logic path 728 to operational step 729 during which controller 116 is configured to increment the line buffer address from address location 2 to address location 3. Stored in the third address is the sum of the values of pixels 526 to 529. Now the values of the remaining pixels in the cell 503 are added to the sum already there by repetition of the foregoing treatment of pixels 514 to 517 in the case of pixels 530 to 533.

Eventually, control is passed along logic path 75o to operational step 752 during which controller 116 is configured to write the output of the barrel shifter (the average of the sum of pixels 526 to 533) into the current address of the frame buffer 112 which would be $X_3,Y_1$. This is denoted as output pixel 564 (FIGURE 5B).

Control is then passed along logic path 754 to decisional step 756 during which controller 116 is configured to determine whether output pixel 564 is the last point of the frame buffer window row.

As output pixel 564 is the last point of the frame buffer window, control is then passed along logic path 764 to decisional step 766 during which controller 116 is configured to determine whether output pixel 564 is the last output pixel of the frame buffer window.

As output pixel 564 is not the last output pixel to be generated in the frame buffer 112, control is then passed along logic path 768 to operational step 770 during which controller 116 is configured to increment the frame buffer Y address from $X_3,Y_1$ to $X_3,Y_2$.

Control is then passed along logic path 772 to operational step 774 during which controller 116 is configured to initialize the frame buffer X address. The X address of the frame buffer is changed from $X_3$ to $X_1$ and the current address of the frame buffer 112 is $X_1,Y_2$.

Control is then passed along logic path 720 to decisional step 721 during which controller 116 is configured to determine whether pixel 533 is the last point of cell 503 row.

As pixel 533 is the last point of cell 503 row, control is then passed along logic path 723 to decisional step 724 during which the controller 116 is configured to determine whether cell 503 is last cell in row.

As cell 503 is last cell in row, control is passed along a logic path 725 to operational step 726 during which controller 116 is configured to initialize the line buffer address 312 back to the first address location. Currently the sum pixels 510 to 517 is stored in the first address of the line buffer 312. Hereafter, the first address of line buffer 312 will be rewritten by the values of the pixels located in cell 504.

Control is then passed along logic path 727 to operational step 704 and the treatment of pixels 534 to 553 in the first rows of cells 504, 505 and 506 is a repetition of that of pixels 510 to 529 followed by treatment of pixels 538 to 557 in the second rows of cells 504, 505 and 506, being a repetition of that for pixels 514 to 533.

An output pixel 566 (Fig.5B) is generated and stored in the $X_1,Y_2$ address of the frame buffer 112 and correspond to the average value of pixels 534 to 540 of cell 504. An output pixel 568 is generated and stored at address location $X_2, Y_2$ of frame buffer 112 and corresponds to the average of pixels 542 to 549 of cell 505. An output pixel 570 is generated and stored at address location $X_3, Y_2$ in frame buffer 112 and 570 corresponds to the average of pixels 550 to 557 of cell 506.

Eventually, control is passed to decisional step 766, when output pixel 570 has been written into the frame buffer location, and the controller 116 determines that output pixel 570 is the last point of frame buffer window. Control passes along a logic path 776 to an end step 778 where operation of the controller 116 is completed.

The present invention may be encompassed in a variety of alternative embodiments. Such alternative embodiments, include but are not limited to the following:

  * The cells of FIGURE 5 may overlap each other.
  * The average may be a weighted average instead of a simple one. Some sort of multiplication and/or division operation may be needed.
  * Use of some scaling mechanism during the cell averaging process to reduce the width (number of bits) of the adder 302, barrel shifter 316, multiplexer, and line buffer 312. For example, the scaling can be done on a pixel by pixel basis as data is output from the interpolator 104, or on a row by row basis by averaging a cell row and scaling the partial result before accumulating it in the line buffer 312.

It will be appreciated that in order to reduce a digital image by a factor which is not a power of two, the image is first magnified by a factor which enables a subsequent reduction by a factor which is a power of two to effect the desired reduction. The power of two reduction factors are 1/2 (0.5), 1/4 (0.25), 1/8 (0.125), 1/16 (0.0626) and so on. If the desired reduction factor is less than one of these, then the magnification factor is obtained by dividing the desired reduction factor by the power of two reduction factor next greater than the desired reduction factor. Thus, in the case of a reduction of 0.3, 0.25 is chosen and the magnification factor derived from (0.3/0.25) = 1.2.

While the invention has been particularly shown and described with reference to a preferred embodiment thereof, it will be understood by those skilled in the art that the foregoing and other changes in form and details may be made therein without departing from the scope of the invention.

## Claims

1. Apparatus for reducing the size of a digital image by a scaling factor of G, comprising first means (104) for magnifying the digital image by a first scaling factor G1, and configured to output a corresponding intermediate digital image, and second means (108) for reducing the intermediate digital image output by the first means (104) by a second scaling factor G2 thereby to generate the reduced digital image, the second scaling factor being the inversion of a power of two.

2. Apparatus according to claim 1, wherein the first means is an interpolator (104) configured to magnify the digital image by the first scaling factor G1, and to output the intermediate digital image indicative of the scaled first image, and the second means is a shrinking module (108) configured to reduce the intermediate digital image output by the interpolator (104) by the second scaling factor G2, thereby to generate the reduced digital image.

3. Apparatus according to claim 1 or 2, wherein the first scaling factor G1 is greater than or equal to one.

4. Apparatus according to claim 1, 2 or 3, wherein the intermediate image is divided into a plurality of cells, each cell having M rows of pixels and N columns of pixels, M and N being powers of two.

5. Apparatus according to claim 1, 2, 3 or 4 wherein the shrinking module (108) includes an adder (302) configured to sum the values of the pixels of each of the cells.

6. Apparatus according to claim 5, wherein the shrinking module (108) includes a barrel shifter (306) to output an average value for the plurality of pixels summed by the adder (302).

7. A method of reducing a first digital image in an image processor by a scaling factor of G, comprising the steps of enlarging the image by a scaling factor G1, and reducing the enlarged image by a second scaling factor G2 for an overall magnification of G = G1xG2, the second scaling factor G2 being the inversion of a power of two.

Fig. 1

```
┌─────────────────────┐
│      RECEIVE        │
│   AND  STORE       │──┐─202
│   INPUT  IMAGE     │
└─────────────────────┘
          │
          │──204
          ▼
┌─────────────────────────┐
│        MAGNIFY         │
│     INPUT  IMAGE       │──┐─206
│  BY SCALING FACTOR G1  │
└─────────────────────────┘
          │
          │──208
          ▼
┌─────────────────────────┐
│        REDUCE          │
│    MAGNIFIED  IMAGE    │──┐─210
│  BY SCALING FACTOR G2  │
└─────────────────────────┘
          │
          │──214
          ▼
┌─────────────────────────┐
│  OUTPUT  AND  STORE    │
│       REDUCED          │──┐─212
│        IMAGE           │
└─────────────────────────┘
```

*Fig. 2*

*Fig. 3*

10 SAMPLES

402

403 404 405 406 407 408 409 410 411 412 413

*Fig. 4A*

12 SAMPLES

402

| X | X | X | X | X | X | X | X | X | X | X | X |

420            424            428

*Fig. 4B*

3 SAMPLES

402

422        426        430

*Fig. 4C*

| A |
|---|
| B |
| C |

*Fig. 4*

EP 0 513 516 A2

501    502    503

| 510 | 511 | 512 | 513 | 518 | 519 | 520 | 521 | 526 | 527 | 528 | 529 |
| 514 | 515 | 516 | 517 | 522 | 523 | 524 | 525 | 530 | 531 | 532 | 533 |

| 534 | 535 | 536 | 537 | 542 | 543 | 544 | 545 | 550 | 551 | 552 | 553 |
| 538 | 539 | 540 | 541 | 546 | 547 | 548 | 549 | 554 | 555 | 556 | 557 |

504    505    506

*Fig. 5A*

501    502    503

$X_1$    $X_2$    $X_3$

| 560 | 562 | 564 | $Y_1$ |
| 566 | 568 | 570 | $Y_2$ |

504    505    506

*Fig. 5B*

18

Fig. 6

Fig. 7A

Fig. 7

Fig. 7B